# EUROPEAN PATENT SPECIFICATION

(11) **EP 3 316 529 B1**
(45) Date of publication and mention of the grant of the patent: **19.02.2020**
(21) Application number: 15898870.9
(22) Date of filing: 17.07.2015
(51) Int. Cl.: H04L 12/26, H04J 14/02, H04Q 11/00, H04L 12/24, H04L 5/00, H04W 16/00, H04W 84/18

(54) **NETWORK MANAGEMENT APPARATUS AND NETWORK MANAGEMENT PROGRAM**
NETZWERKVERWALTUNGSVORRICHTUNG UND NETZWERKVERWALTUNGSPROGRAMM
DISPOSITIF DE GESTION DE RÉSEAU ET PROGRAMME DE GESTION DE RÉSEAU

(43) Date of publication of application: 02.05.2018
(73) Proprietor: Mitsubishi Electric Corporation, Chiyoda-ku Tokyo 100-8310 (JP)
(72) Inventor: YOSHIDA, Sota, Tokyo 100-8310 (JP)
(74) Representative: Lavoix
(86) International application number: PCT/JP2015/070543
(87) International publication number: WO 2017/013708

(56) References cited:
- WO-A1-2012/053634
- WO-A1-2014/121843
- JP-A- 2002 353 989
- US-A1- 2009 059 814
- US-A1- 2010 167 752
- US-A1- 2013 195 460

## Description

### Technical Field

The present invention relates to a technology for managing a network system.

### Background Art

An elastic optical network is drawing attention, as a technology for implementing an increase in a capacity of an optical network applying wavelength division multiplexing transmission.

Non-Patent Literature 1 discloses optimization of the elastic optical network.

In a conventional fixed grid optical network, a band that falls within each center frequency spacing of a grid having sparse center frequencies is assigned to each optical path. When the grid having the sparse center frequencies is defined by (193.1 THz + {12.5, 25, 50, 100} × n GHz), the center frequency spacings of the grid are (12.5, 25, 50, 100 GHz), and the band that falls within each of these center frequency spacings is assigned to each optical path.

On the other hand, in the elastic optical network, it is possible to vary a center frequency and a frequency slot width to perform band assignment for each optical path. An example of the center frequency that is variable is (193.1 THz + 6.25 × n GHz), and an example of the frequency slot width that is variable is (12.5 GHz × m).

The elastic optical network allows a frequency grid width to be different between the optical paths having different required bands and allows a frequency grid width to be different between the optical paths in which different modulation methods are used.

Then, in the elastic optical network, minimum necessary frequency resources are densely allocated to each optical path, so that network resource utilization efficiency may be improved.

The optical network has a constraint that a frequency band assigned to each optical path must be unvaried from a start-point apparatus to an end-point apparatus, except for a case going through a wavelength conversion apparatus. This constraint is referred to as wavelength/frequency slot continuity constraint. "Wavelength/frequency" indicates a wavelength and a frequency.

It becomes necessary that, at a time of optical path provisioning to determine a route of each optical path and a frequency band to be assigned to each optical path, frequency bands of the optical paths that pass through a wavelength division multiplexed link between transmission apparatuses do not mutually contend.

In the elastic optical network, optical paths are allowed to be irregularly disposed on a frequency axis. Thus, a lot of unused and narrow frequency bands may be generated as frequency bands that can accommodate the optical paths, so that network resource utilization efficiency may be reduced.

This problem is known as an RSA problem that how a transmission path should be determined and how a frequency slot obtained by partitioning the frequency band or the frequency axis by the slot should be assigned to the transmission path, in response to an optical path establishment request. RSA (registered trademark) is an abbreviation for Routing and Spectrum Assignment.

As a solution to the RSA problem, a method of automatically computing a route of an optical path and automatically allocating a frequency to be used in the optical path has been proposed.

The route of the optical path is automatically computed by using a Dijkstra's algorithm and a KSP algorithm for a route search. The Dijkstra's algorithm is a method of deducing a shortest path between a start-point apparatus and an end-point apparatus. The KSP algorithm is a method of sequentially computing a plurality of paths, starting from the shortest path. KSP is an abbreviation for k-shortest path.

The frequency to be used in the optical path is automatically allocated by applying a method such as a First-Fit method or a Least-Used method to the routing of the optical path. The first-Fit method is a method of selecting a smallest wavelength/frequency among available wavelength/frequencies. The least-Used method is a method of selecting a wavelength/frequency having a smallest number of links that uses the wavelength/frequency.

As a method when there are a plurality of optical path establishment requests, Patent Literature 2 proposes a method of computing a route of each optical path, rearranging the route of each optical path computed in the ascending order of lengths, and allocating a frequency to be used in each optical path in an order resulting from the rearrangement. The frequency to be used in each optical path is allocated, using the First-Fit method.

There are two types of optical path provisioning that are automatic provisioning and manual provisioning.

In the automatic provisioning, a route of an optical path and a frequency to be used are automatically computed, using a route selection algorithm and a frequency allocation algorithm.

In the manual provisioning, a route of an optical path and a frequency to be used are manually selected by a network operation manager.

The automatic provisioning has a disadvantage as follows.

A manager that operates a network sets a complex constraint condition that a wavelength/frequency be determined in advance according to a service priority of traffic that is accommodated by the optical path or that a specific wavelength/frequency be used for a bypass path at a time of recovery of a failure.

In the automatic provisioning, however, the constraint condition as mentioned above is not taken into consideration. Thus, a desired route and a desired frequency to be used may not be computed.

The manual provisioning has a disadvantage that the manager needs to perform a work of checking whether or not desired wavelength/frequency resources are continuously unoccupied in the route through which the optical path passes. The route through which the optical path passes means a relay apparatus and a wavelength multiplexed link through which the optical path passes.

In the conventional fixed grid optical network, the band that falls within each center frequency spacing of the grid having the sparse center frequencies is assigned to each optical path. Thus, the manager should give a wavelength number to each of the center frequencies and should check whether or not the wavelength number that has been given is continuously unoccupied.

In the elastic optical network, however, a necessary frequency band differs according to each optical path, and a variable center frequency and a variable frequency slot width are treated as wavelength/frequency resources. Thus, a work of checking whether or not desired wavelength/frequency resources are unoccupied becomes complicated.

Patent Literature 3 discloses a wireless communication method assigning the number of frequency bands to a terminal in consideration of the upper limit of power consumption of the terminal, a wireless communication system and a base station.

Patent Literature 4 discloses a method of configuring and optimizing a wireless mesh network by means of an interactive user interface and automated optimization routines.

Patent Literature 5 discloses methods of configuring nodes for burst switching, apparatus for configuring a node, optical networks, and corresponding computer programs.

Patent Literature 6 discloses a method for reallocating a wavelength path set in a communication network.

Patent Literature 7 discloses a communication path setting method using a screen of a display device of a terminal device for worker utilized in an information transmission system such as an optical submarine cable system.

### Citation List

### Non-Patent Literature

Non-Patent Literature 1: "Design and Impact of Elastic Optical Path Networks ", 2013 IEICE Society Conference, BI-2-2, presented at 2013 IEICE Society Conference which took place from 09/17/2013 to 09/20/2013.
Non-Patent Literature 2: "Distance-adaptive Frequency Slot Allocation Algorithm for Spectrally-Efficient Elastic Optical Network", 2014 IEICE Society Conference B-12-8 presented at 2014 IEICE Society Conference which took place from 09/23/2014 to 09/26/2014.
Patent Literature 3: US 2010/167752.
Patent Literature 4: US2009/059814.
Patent Literature 5: WO2014/121843.
Patent Literature 6: US2013/195460.
Patent Literature 7: JP 2002/353989.

### Summary of Invention

### Technical Problem

An object of the present invention is to allow a usage status of each frequency slot to be readily checked.

### Solution to Problem

A network management apparatus of the present invention is provided according to claim 1.

A network management program of the present invention is provided according to claim 6.

Preferred embodiments of the invention are defined in the dependent claims.

### Advantageous Effects of Invention

According to the present invention, the assignment screen including the usage status table is displayed. Thus, the usage status of each frequency slot may be readily checked.

### Brief Description of Drawings

Fig. 1 is a configuration diagram of a network management system 100 in a first embodiment.
Fig. 2 is a functional configuration diagram of a network management apparatus 200 in the first embodiment.
Fig. 3 is a functional configuration diagram of a GUI control unit 210 in the first embodiment.
Fig. 4 is a configuration diagram of a routing screen 120 in the first embodiment.
Fig. 5 is a schematic diagram of the routing screen 120 in the first embodiment.
Fig. 6 is a configuration diagram of an assignment screen 130 in the first embodiment.
Fig. 7 is a schematic diagram of the assignment screen 130 in the first embodiment.
Fig. 8 is a functional configuration diagram of a provisioning unit 220 in the first embodiment.
Fig. 9 is a configuration diagram of a link management file 292 in the first embodiment.
Fig. 10 is a configuration diagram of a vacant range file 293 in the first embodiment.
Fig. 11 is a configuration diagram of a slot number management file 294 in the first embodiment.
Fig. 12 is a flowchart of a network management method in the first embodiment.
Fig. 13 is a flowchart of a routing information reception process (S110) in the first embodiment.
Fig. 14 is a flowchart of a routing information checking process (S113) in the first embodiment.
Fig. 15 is a flowchart of an assignment screen display process (S120) in the first embodiment.
Fig. 16 is a flowchart of a usage status table generation process (S121) in the first embodiment.
Fig. 17 is a flowchart of a vacancy management process (S122) in the first embodiment.
Fig. 18 is a flowchart of an assignment range extraction process (S130) in the first embodiment.
Fig. 19 is a flowchart of the assignment range extraction process (S130) in the first embodiment.
Fig. 20 is a schematic diagram of the assignment screen 130 in the first embodiment.
Fig. 21 is a schematic diagram of the assignment screen 130 in the first embodiment.
Fig. 22 is a hardware configuration diagram of the network management apparatus 200 in the embodiment.

### Description of Embodiments

### First Embodiment.

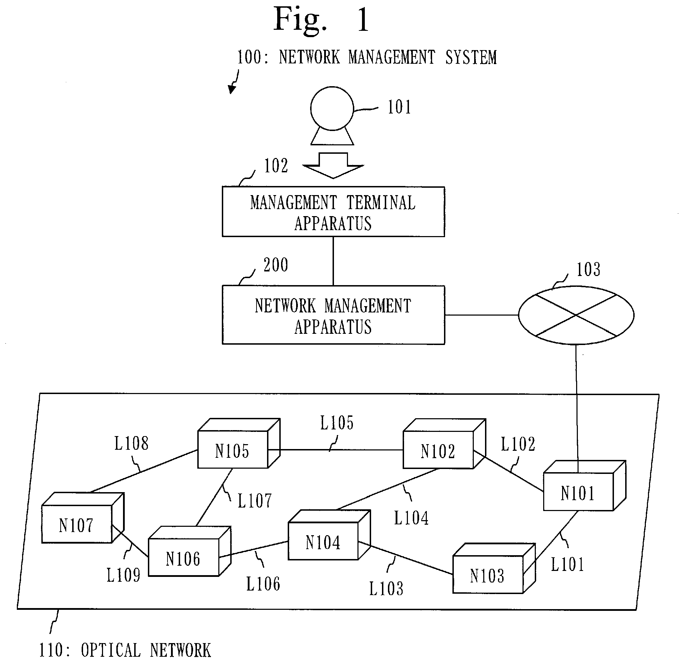

A network management system 100 to manage a network system will be described, based on Figs. 1 to 22.

### ***Description of Configuration***

The network management system 100 will be described, based on Fig. 1.

The network management system 100 includes a network management apparatus 200 and a management terminal apparatus 102.

The network management apparatus 200 is a system to manage the network system by performing an operation, monitoring, and control for the network system.

The network system includes two or more transmission apparatuses and links that connect the respective transmission apparatuses.

The network system in this embodiment is an optical network 110.

The optical network 110 is a network system to perform optical communication.

The optical network 110 includes the two or more transmission apparatuses and two or more links.

N101 to N107 are each an apparatus identifier identifying the transmission apparatus. Each transmission apparatus in the optical network 110 is also referred to as an optical transmission apparatus. An optical switch to switch an optical signal without electrical termination is an example of the transmission apparatus.

L101 to L109 are each a link identifier for identifying the link. Each link in the optical network 110 is also referred to as a wavelength division multiplexed link.

The network management apparatus 200 is connected to the optical network 110 via a network 103 to manage the optical network 110.

The management terminal apparatus 102 is an apparatus to be operated by a manager 101 in order to use the network management apparatus 200.

The management terminal apparatus 102 includes HMIs such as a keyboard, a mouse, and a display device. HMI is an abbreviation for Human Machine Interface.

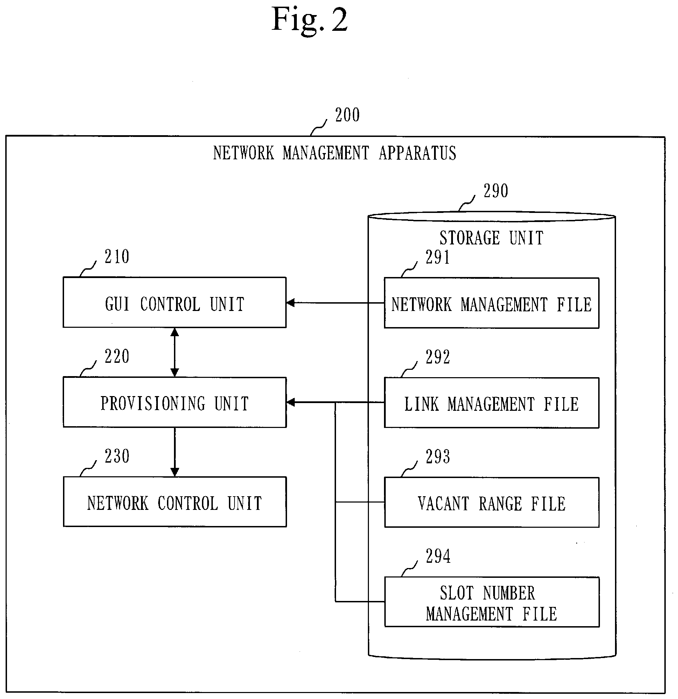

A functional configuration of the network management apparatus 200 will be described, based on Fig. 2.

The network management apparatus 200 includes a GUI control unit 210, a provisioning unit 220, a network control unit 230, and a storage unit 290.

The GUI control unit 210 performs communication with the management terminal apparatus 102, and controls a GUI to be displayed on the display device of the management terminal apparatus 102. GUI is an abbreviation for Graphical User Interface.

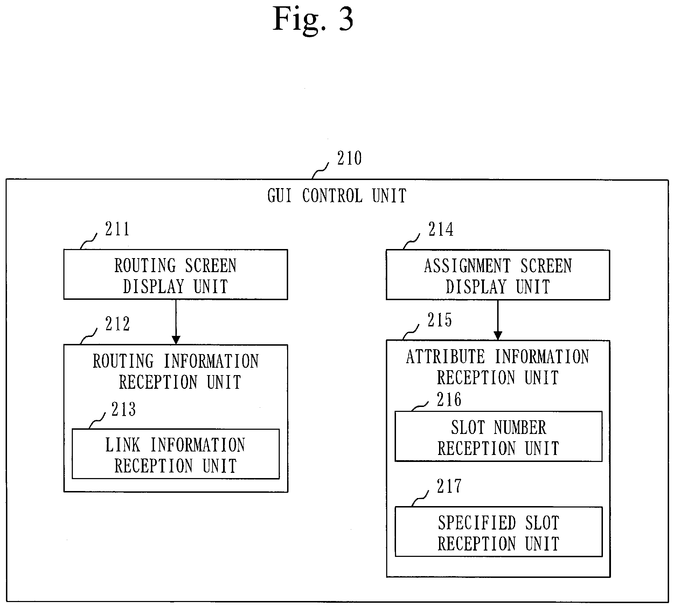

A functional configuration of the GUI control unit 210 will be described, based on Fig. 3.

The GUI control unit 210 includes a routing screen display unit 211, a routing information reception unit 212, an assignment screen display unit 214, and an attribute information reception unit 215.

The routing screen display unit 211 causes the display device to display a routing screen including user interfaces for specifying information to identify a plurality of the links

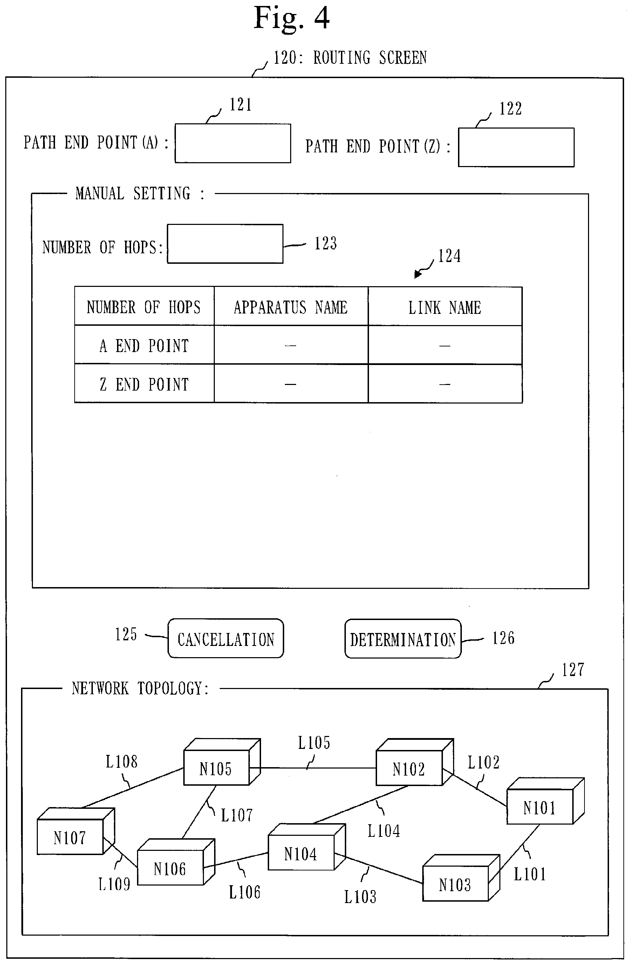

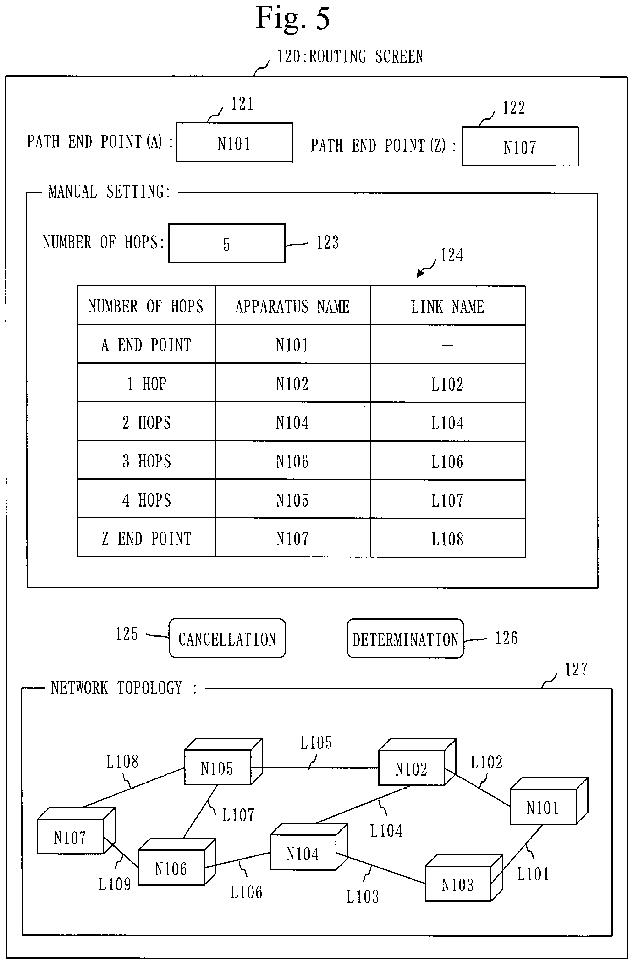

A configuration of a routing screen 120 will be described, based on Fig. 4 and Fig. 5.

The routing screen 120 is a screen on which routing information is specified. The routing information is information to identify one of transmission paths. Each transmission path on the optical network 110 is referred to as an optical path.

The routing screen 120 includes a first text box 121 and a second text box 122.

The first text box 121 is a user interface for specifying a first apparatus identifier. The first apparatus identifier identifies the transmission apparatus that serves as one end point of the transmission path.

The second text box 122 is a user interface for specifying a second apparatus identifier. The second apparatus identifier identifies the transmission apparatus that serves as the other end point of the transmission path.

The routing screen 120 includes a third text box 123 and a routing table 124.

The third text box 123 is a user interface for specifying the number of hops. The number of hops is the number of the links included in the transmission path.

The routing table 124 is a user interface for specifying information to identify a plurality of the transmission apparatuses and the plurality of the links.

As illustrated in Fig. 5, each apparatus name of the plurality of transmission apparatuses and each link name of the plurality of the links are input to the routing table 124. The apparatus name is an apparatus identifier for identifying one of the transmission apparatuses. The link name is the link identifier for identifying one of the links.

The routing screen 120 includes a cancellation button 125 and a determination button 126.

The cancellation button 125 is a user interface for cancelling the information input to the first text box 121, the second text box 122, the third text box 123, and the routing table 124.

The determination button 126 is a user interface for inputting the information input to the first text box 121, the second text box 122, the third text box 123, and the routing table 124 to the network management apparatus 200.

The routing screen 120 includes a network configuration diagram 127.

The network configuration diagram 127 is a diagram illustrating a network topology of the network system. The network configuration diagram 127 is generated, using a network management file 291.

The routing information reception unit 212 will be described by returning to Fig. 3.

The routing information reception unit 212 receives the routing information specified on the routing screen 120.

The routing information reception unit 212 includes a link information reception unit 213.

The link information reception unit 213 receives link information to identify the plurality of the links among the two or more links included in the network system.

The link information received is the information specified on the routing screen 120.

The link information is specified by using the routing table 124 on the routing screen 120.

The assignment screen display unit 214 causes the display device to display an assignment screen 130 including a usage status table 139. The usage status table 139 is generated by a provisioning unit 220.

The assignment screen 130 includes a user interface for specifying a modulation method and a user interface for specifying a bandwidth.

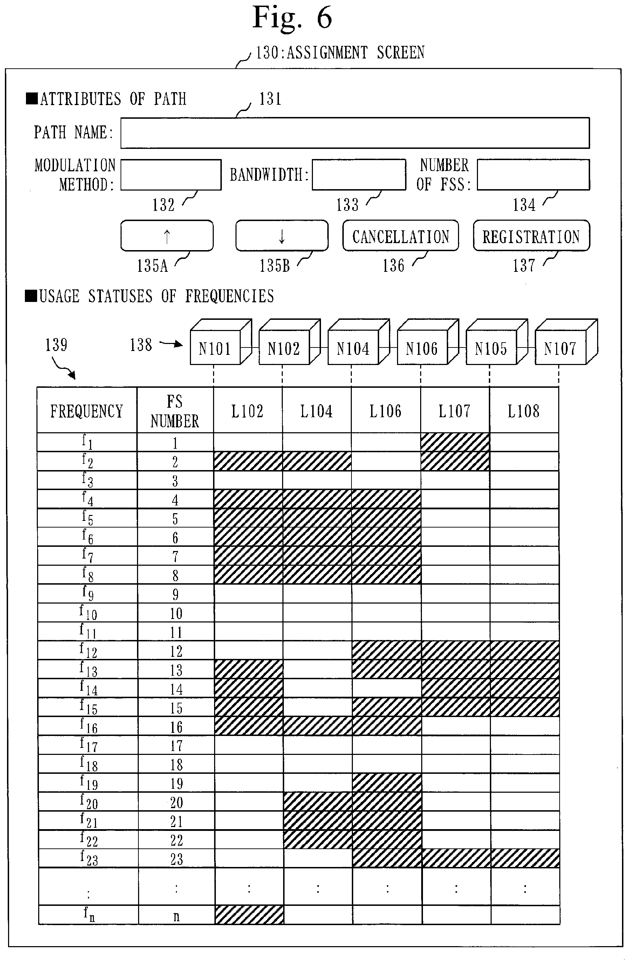

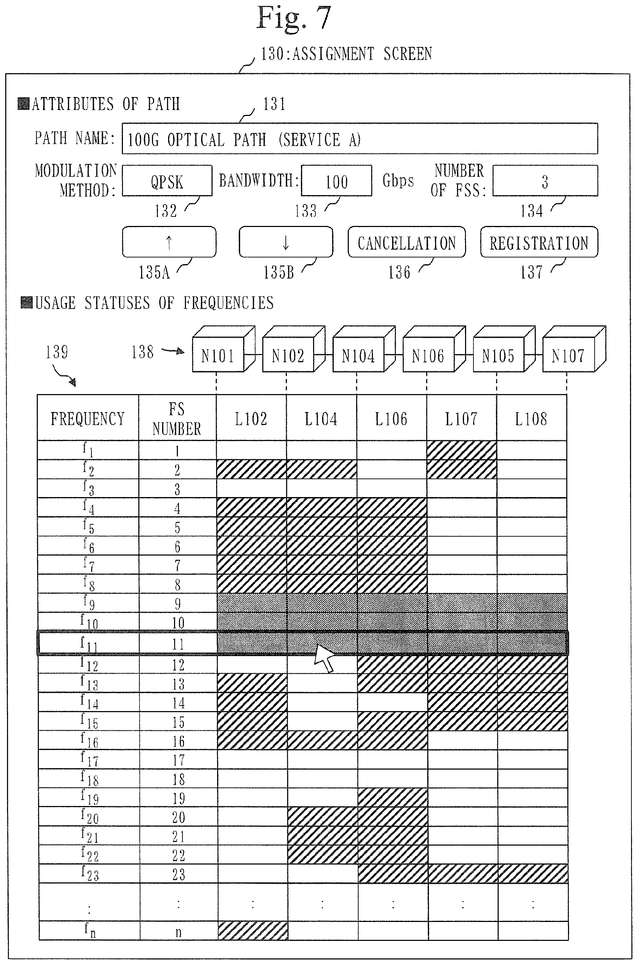

A configuration of the assignment screen 130 will be described, using Fig. 6 and Fig. 7.

The assignment screen 130 is a screen on which attribute information is specified, and is a screen on which an assignment range is indicated. The attribute information indicates an attribute included by the transmission path. The assignment range is a slot range that is assigned to the transmission path. The slot range is a range of one or more frequency slots.

The assignment screen 130 includes a first text box 131, a second text box 132, a third text box 133, and a fourth text box 134.

The first text box 131 is a user interface for specifying a path identifier for identifying the transmission path.

The second text box 132 is a user interface for specifying the modulation method to be used on the transmission path.

The third text box 133 is a user interface of specifying the bandwidth to be used in the transmission path.

The fourth text box 134 is a user interface for displaying the number of the frequency slots to be used in the transmission path. An abbreviation for frequency slot is FS.

When the modulation method is input to the second text box 132 and the bandwidth is input to the third text box 133, the number of the FSs is displayed in the fourth text box 134.

The assignment screen 130 includes a routing diagram 138.

The routing diagram 138 is a diagram illustrating the plurality of the transmission apparatuses included in the transmission path.

The assignment screen 130 includes the usage status table 139.

The usage status table 139 is a table including cells arranged in the form of a two-dimensional array.

In the usage status table 139, elements in each row are a frequency and an FS number, and an element in each column is the link name. The FS number is a slot identifier for identifying one of the frequency slots.

The frequency indicated in the usage status table 139 is a center frequency in a frequency band to be used in the frequency slot that is identified by the FS number. The frequency and the FS number are also referred to as frequency resources.

Each white cell means that the frequency slot corresponding to the cell is not used in the link corresponding to the cell.

Each hatched cell means that the frequency slot corresponding to the cell is used by the link corresponding to the cell.

In Fig. 7, one of the rows included in the usage status table 139 enclosed by a thick frame is a specified slot row corresponding to a specified slot. The specified slot is the frequency slot that has been specified. The specified slot row is specified by using a mouse cursor.

Each filled cell is a cell corresponding to the assignment range.

When the frequency slot is specified in the usage status table 139 and when the specified slot row is changed using an upper button 135A or a lower button 135B, a cell corresponding to the frequency slot included in the assignment range is filled.

The assignment screen 130 includes the upper button 135A, the lower button 135B, a cancellation button 136, and a registration button 137.

The upper button 135A is a user interface for moving each specified frequency slot row to one upper row.

The lower button 135B is a user interface for moving each specified frequency slot to one lower row.

The cancellation button 136 is a user interface for cancelling the information input to the first to third text boxes, the number of the FSs displayed in the fourth text box 134, and the assignment range indicated by the usage status table 139.

The registration button 137 is a user interface for registering the assignment range indicated by the usage status table 139 in each transmission apparatus.

The attribute information reception unit 215 will be described by returning to Fig. 3.

The attribute information reception unit 215 receives the attribute information indicating the attribute included by the transmission path.

The attribute information reception unit 215 includes a slot number reception unit 216 and a specified slot reception unit 217.

The slot number reception unit 216 receives slot number information to specify the number of the frequency slots. The slot number information is included in the attribute information.

The slot information that is received is the modulation method and the bandwidth specified on the assignment screen 130.

The number specified by the slot number information is the number of the slots associated with the modulation method and the bandwidth included in the slot number information among the number of the slots included in a slot number management file 294 including the number of the slots associated with each modulation method and each bandwidth.

The specified slot reception unit 217 receives a specified slot identifier for identifying one of the slots that has been specified. The specified slot identifier is included in the attribute information.

The specified slot identifier to be received is specified on the assignment screen 130. The specified slot identifier is specified by clicking the specified slot row in the usage status table 139 on the assignment screen 130 or moving the specified slot row up or down on the assignment screen 130.

The provisioning unit 220 will be described by returning to Fig. 2.

The provisioning unit 220 performs provisioning to assign one or more of the frequency slots to the transmission path.

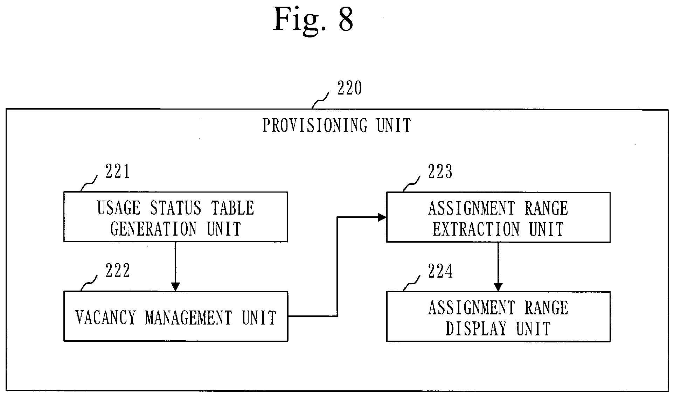

A functional configuration of the provisioning unit 220 will be described, based on Fig. 8.

The provisioning unit 220 includes a usage status table generation unit 221, a vacancy management unit 222, an assignment range extraction unit 223, and an assignment range display unit 224.

The usage status table generation unit 221 generates the usage status table 139.

The usage status table 139 includes the cells arranged in the form of the two-dimensional array having the columns and the rows of the link identifiers each for identifying the link included in the network system and slot identifiers each for identifying the frequency slot that is used in the network system. Then, the usage status table 139 indicates a status whether the frequency slot corresponding to each cell is in use or not in the link corresponding to the cell, by a display mode of the cell.

The usage status table 139 includes the cell corresponding to the link identifier of each of the plurality of the links and the slot identifier of each of a plurality of the frequency slots whose frequencies are continuous.

The usage status table generation unit 221 generates the usage status table 139, using a link management file 292.

The link management file 292 includes currently used slot information that is information associated with each link identifier, the currently used slot information being information identifying one or more of the frequency slots that are in use.

The usage status table 139 is generated by using, among the currently used slot information included in the link management file 292, the currently used slot information associated with each link identifier of each of the plurality of the links that are identified by the received link information.

The vacancy management unit 222 generates a vacant range file 293, using the usage status table 139.

The vacant range file 293 includes vacant range information to identify a slot range constituted from successive frequency slots that are not used in any of the plurality of the links.

The assignment range extraction unit 223 extracts the assignment range from the plurality of the frequency slots.

The assignment range is a slot range constituted from successive frequency slots that are not used by any of the plurality of the links, and is a slot range constituted from the number of the frequency slots that is identified by the received slot number information.

The assignment range extraction unit 223 extracts the assignment range as follows.

The assignment range extraction unit 223 extracts the assignment range under a condition that the assignment range includes the specified slot that is identified by the received specified slot identifier.

The assignment range extraction unit 223 selects the vacant range information from the vacant range file 293 and extracts the assignment range from the slot range that is identified by the selected vacant range information.

The selected vacant range information is vacant range information to identify the slot range including the frequency slot that is identified by the specified slot identifier and including the number of the frequency slots being equal or more than the number of the frequency slots that is identified by the slot number information,.

When the slot range including the specified slot cannot be extracted as the assignment range, the assignment range extraction unit 223 extracts a slot range not including the specified slot, as the assignment range.

The assignment range extraction unit 223, however, extracts the slot range not including the specified slot, as the assignment range, under a condition that the number of the frequency slots from the specified slot to the slot range is less than a threshold value.

The assignment range display unit 224 sets the display mode of each cell included in the usage status table 139 and corresponding to the extracted assignment range to a display mode indicating the assignment range.

The network control unit 230 controls each transmission apparatus included in the network system.

When one or more of the frequency slots are assigned to the transmission path, the network control unit 230 sets, in each transmission apparatus included in the transmission path, the attribute included by the transmission path and the one or more of the frequency slots assigned to the transmission path.

The storage unit 290 stores data to be used, generated, or input/output by the network management apparatus 200.

Examples of the data to be stored in the storage unit 290 are the network management file 291, the link management file 292, the vacant range file 293, and the slot number management file 294.

The network management file 291 includes, as information on the network system, information on each transmission apparatus included in the network system, information on each link included in the network system, and information on each frequency slot that is used in the network system.

The link management file 292 includes the currently used slot information being the information associated with each link identifier and being the information for identifying the one or more of the frequency slots that are in use.

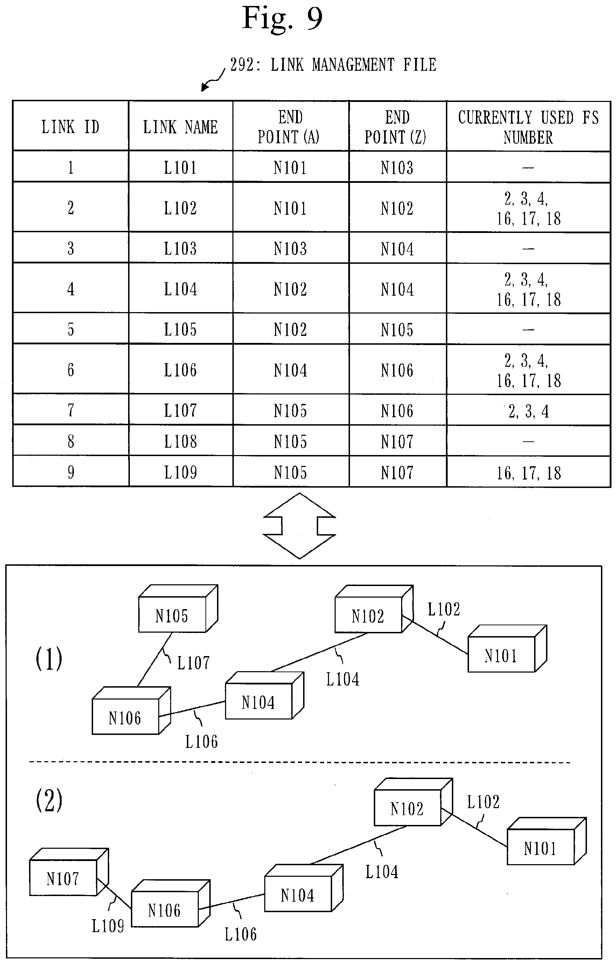

In the link management file 292 in Fig. 9, a link ID, the link name, an end point (A), an end point (Z), and a currently used FS number are associated with one another. The currently used FS number is an example of the currently used slot information.

The link ID and the link name are the link identifier for identifying each link.

The end point (A) indicates the apparatus identifier of the transmission apparatus that serves as one end point of the link.

The end point (Z) indicates the apparatus identifier of the transmission apparatus that serves as the other end point of the link.

The currently used FS number is the slot identifier of the frequency slot that is in use in the link.

When optical paths indicated by (1) and (2) in Fig. 9 are present, the link names, the end points (A), and the end points (Z) given in Fig. 9 are registered in the link management file 292.

The vacant range file 293 includes the vacant range information to identify the slot range constituted from the successive frequency slots that are not used in any of the plurality of the links. The slot range constituted from the frequency slots that are not used by any of the plurality of links is referred to as a vacant range.

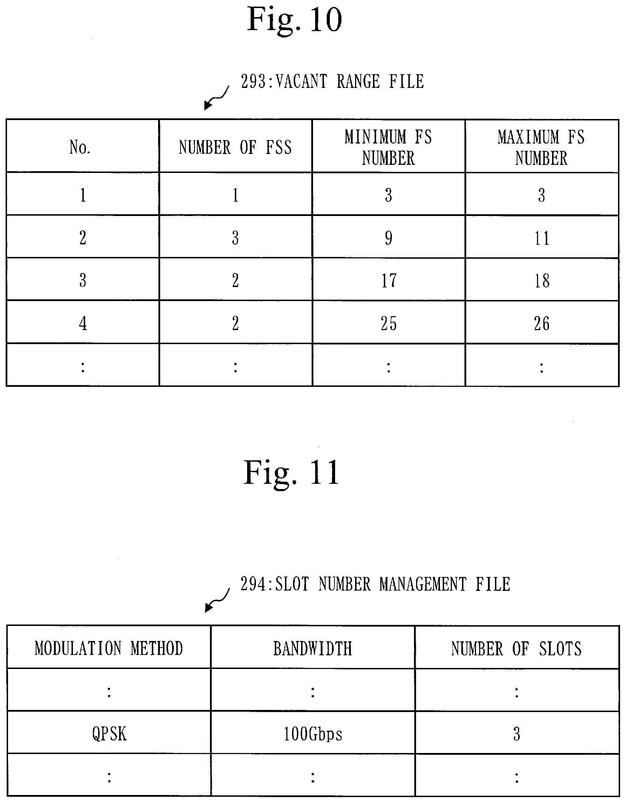

In the vacant range file 293 in Fig. 10, No., the number of the FSs, a minimum FS number, and a maximum FS number are associated with one another. The number of the FSs, the minimum FS number, and the maximum FS number constitute an example of the vacant range information.

The No. is an identifier for identifying each vacant range.

The number of the FSs is the number of the frequency slots included in the vacant range.

The minimum FS number is for identifying, among the frequency slots included in the vacant range, the frequency slot whose frequency is minimum.

The maximum FS number is for identifying, among the frequency slots included in the vacant range, the frequency slot whose frequency is maximum.

As illustrated in Fig. 11, the slot number management file 294 includes the number of the slots associated with each modulation method and each bandwidth.

### ***Description of Operations***

Operations of the network management apparatus 200 correspond to a network management method. The network management method corresponds to a processing procedure of a network management program.

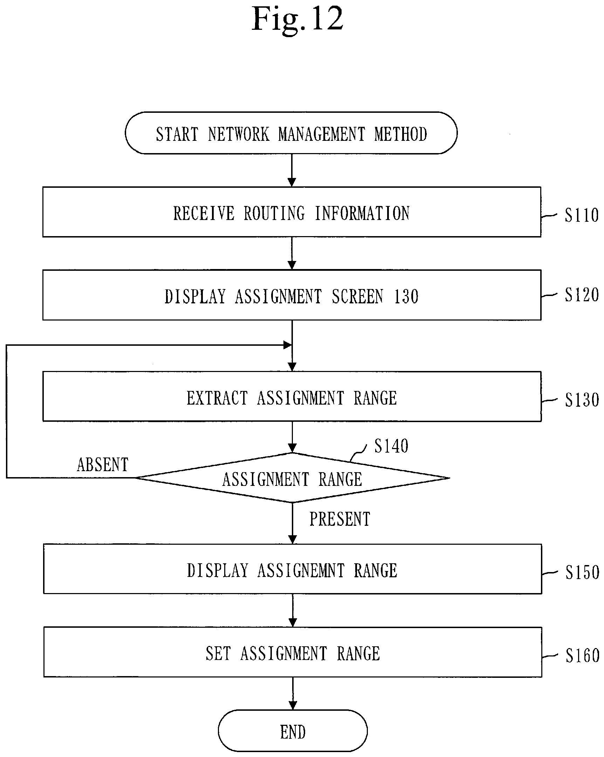

The network management method will be described, based on Fig. 12.

In S110, the network management apparatus 200 receives routing information.

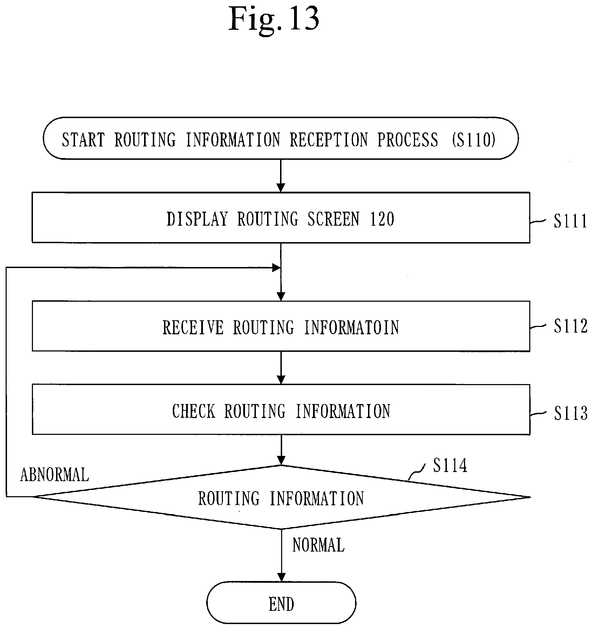

A routing information reception process (S110) will be described, based on Fig. 13.

S111 is a routing screen display process.

In S111, the routing screen display unit 211 generates a network configuration diagram 127 using the network management file 291 and generates data of a routing screen 120 including the network configuration diagram 127.

Then, the routing screen display unit 211 transmits the data of the routing screen 120 to the management terminal apparatus 102, thereby causing the display device of the management terminal apparatus 102 to display the routing screen 120.

This causes the routing screen 120 as illustrated in Fig. 4 to be displayed on the display device of the management terminal apparatus 102.

As illustrated in Fig. 5, a path end point (A), a path end point (Z), the number of hops, a plurality of the apparatus names, and a plurality of the link names are input into the routing screen 120, as the routing information. Then, after the routing information has been input, the determination button 126 is depressed.

S112 is a routing information reception process.

In S112, the routing information reception unit 212 receives the routing information input to the routing screen 120.

S113 is a routing information checking process.

In S113, the routing information reception unit 212 checks the received routing information.

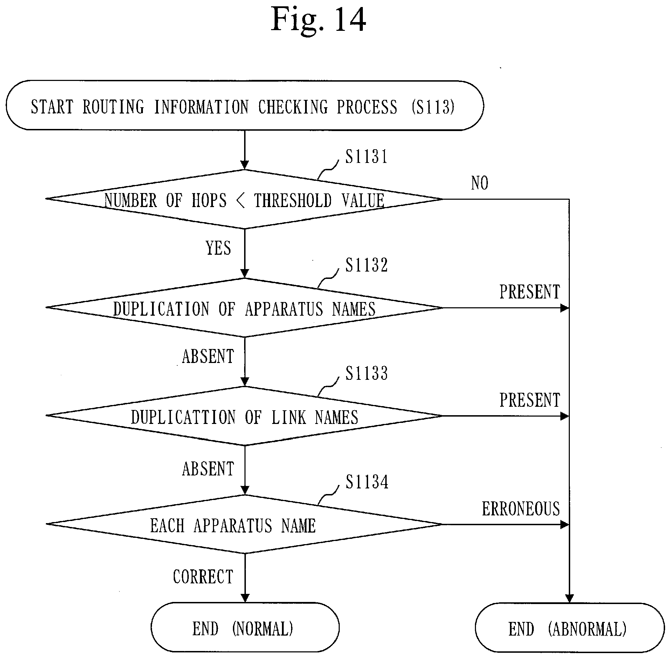

The routing information checking process (S113) will be described, based on Fig. 14.

In S1131, the routing information reception unit 212 compares the number of hops with a hop number threshold value.

If the number of hops is less than the hop number threshold value, the procedure proceeds to S1132.

If the number of hops is equal to or more than the hop number threshold value, the routing information reception unit 212 determines that the routing information is abnormal. The routing information checking process (S113) is then finished.

In S1132, the routing information reception unit 212 determines whether there is a duplication in a plurality of the apparatus names.

If there is no duplication in the plurality of the apparatus names, the procedure proceeds to S1133.

If there is the duplication in the plurality of the apparatus names, the routing information reception unit 212 determines that the routing information is abnormal. The routing information checking process (S113) is then finished.

In S1133, the routing information reception unit 212 determines whether there is a duplication in a plurality of the link names.

If there is no duplication in the plurality of the link names, the procedure proceeds to S1134.

If there is the duplication in the plurality of the link names, the routing information reception unit 212 determines that the routing information is abnormal. The routing information checking process (S113) is then finished.

In S1134, the routing information reception unit 212 determines whether the plurality of the apparatus names corresponding to the plurality of the link names are correct, using the network management file 291 or the network configuration diagram 127.

When the apparatus name corresponding to the link name matches the apparatus name of the transmission apparatus that serves as the end point of the link that is identified by the link name, the apparatus name corresponding to the link name is correct.

In the routing table 124 in Fig. 5, the apparatus names corresponding to the link name of L102 are N101 and N102. In the network configuration diagram 127 in Fig. 5, the end points of the link L102 are the transmission apparatus N101 and the transmission apparatus N102. Accordingly, the N101 and the N102 corresponding to the L102 are correct apparatus names.

If the plurality of the apparatus names corresponding to the plurality of the link names are correct, the routing information reception unit 212 determines that the routing information is normal. The routing information checking process (S113) is then finished.

If at least one of the apparatus names corresponding to at least one of the link names is erroneous, the routing information reception unit 212 determines that the routing information is abnormal. The routing information checking process (S113) is then finished.

The description will be continued from S114, by returning to Fig. 13.

If the routing information is normal in S114, the routing information reception process (S110) is finished.

If the routing information is abnormal, the routing information reception unit 212 displays, on the routing screen 120, an error message indicating that the routing information is abnormal, thereby prompting input of normal routing information. Then, the procedure returns to S112.

The description will be continued from S120, by returning to Fig. 12.

In S120, the network management apparatus 200 causes an assignment screen 130 as illustrated in Fig. 6 to be displayed on the display device of the management terminal apparatus 102.

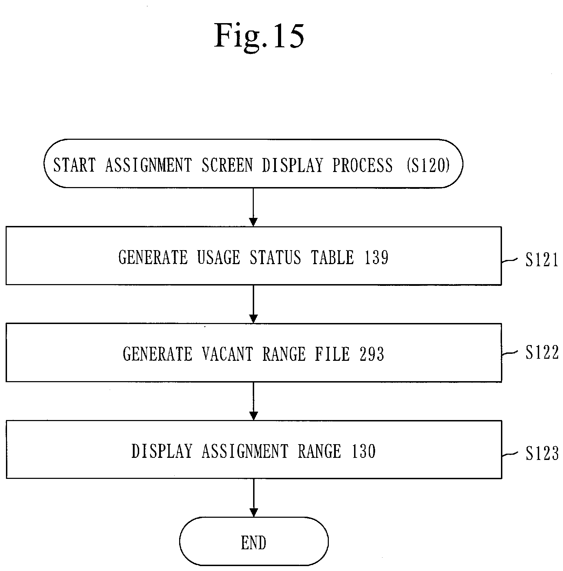

An assignment screen display process (S120) will be described, based on Fig. 15.

S121 is a usage status table generation process.

In S121, the usage status table generation unit 221 generates a usage status table 139 as illustrated in Fig. 6, using the link management file 292.

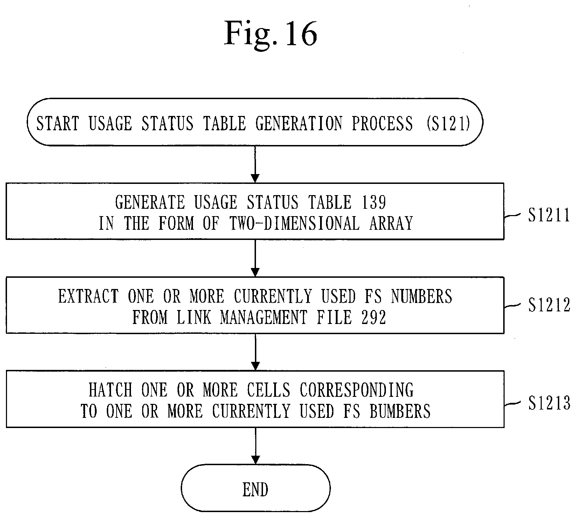

The usage status table generation process (S121) will be described, based on Fig. 16.

In S1211, the usage status table generation unit 221 generates the usage status table 139 in the form of a two-dimensional array.

Elements in each row of the usage status table 139 are the center frequency and the FS number of the frequency slot used in the network system. The center frequency and the FS number are obtained from the network management file 291.

Elements in columns of the usage status table 139 are a plurality of the link names included in the received routing information.

In S1212, the usage status table generation unit 221 extracts, from the link management file 292, one or more of the currently used FS numbers corresponding to the link name, for each link name included in the received routing information.

In S1213, the usage status table generation unit 221 selects, for each link name included in the received routing information, one or more of the cells corresponding to the link name and the extracted one or more of the currently used FS numbers, from the usage status table 139. Then, the usage status table generation unit 221 hatches the selected one or more of the cells.

After 1213, the usage status table generation process (S121) is finished.

The description will be continued from S122, by returning to Fig. 15.

S122 is a vacancy management process.

In S122, the vacancy management unit 222 generates a vacant range file 293, using the usage status table 139.

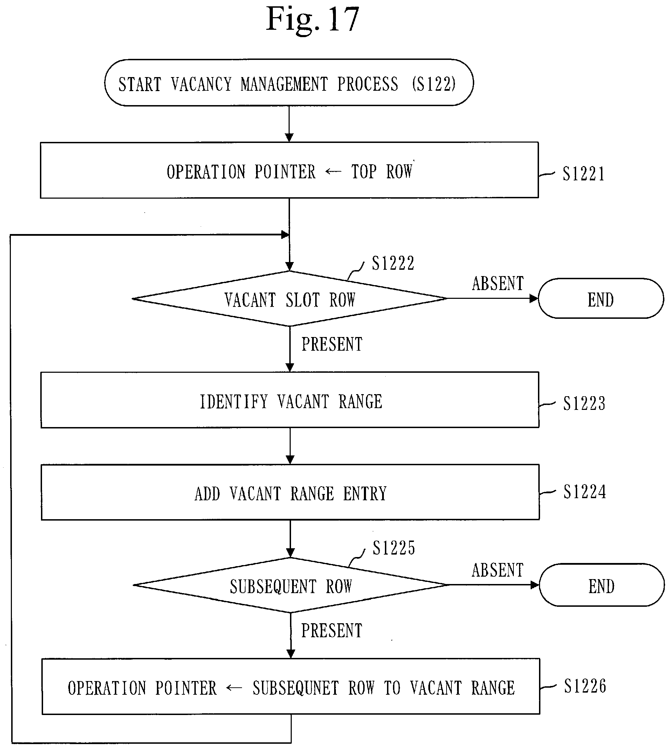

The vacancy management process (S122) will be described, based on Fig. 17.

In S1221, the vacancy management unit 222 sets a top row of the usage status table 139 at an operation pointer.

In S1222, the vacancy management unit 222 searches the usage status table 139 downward from the row indicated by the operation pointer and determines whether there is a vacant slot row.

The vacant slot row is the row corresponding to the FS number of a vacant slot. The vacant slot is the frequency slot in which the display mode of each corresponding cell is a display mode for nonuse. That is, the vacant slot is the frequency slot that is not used in any link of a plurality of the links.

In Fig. 6, each cell corresponding to the row with the FS number of 9 is not hatched. Therefore, the row with the FS number of 9 is the vacant slot row.

If there is the vacant slot row, the procedure proceeds to S1223.

If there is not the vacant slot row, the vacancy management process (S122) is finished.

In S1223, the vacancy management unit 222 identifies a range from the vacant slot row to one or more successive vacant slot rows, as a vacant range.

In Fig. 6, three successive rows from the row with the FS number of 9 to the row with the FS number of 11 are all the vacant slot rows. However, the row with the FS number of 12 is not a vacant slot row. Accordingly, the three successive rows from the row with the FS number of 9 to the row with the FS number of 11 are the vacant range.

In S1224, the vacancy management unit 222 generates a vacancy management entry including the number of the FSs, the minimum FS number, and the maximum FS number, and adds the generated vacancy management entry to the slot number management file 294.

When the three successive rows from the row with the FS number of 9 to the row with the FS number of 11 are the vacant range, the number of the FSs is 3, the minimum FS number is 9, and the maximum FS number is 11. Accordingly, the vacant management entry of No. 2 is added in the vacant range file 293 in Fig. 10.

In S1225, the vacancy management unit 222 determines whether there is a subsequent row to the vacant range.

If there is the subsequent row to the vacant range, the procedure proceeds to S1226.

If there is no subsequent row to the vacant range, the vacancy management process (S122) is finished.

In S1226, the vacancy management unit 222 sets the subsequent row to the vacant range at the operation pointer.

The description will be continued from S123, by returning to Fig. 15.

S123 is an assignment screen display process.

In S123, the assignment screen display unit 214 generates data of the assignment screen 130 including the usage status table 139.

Then, the assignment screen display unit 214 transmits the data of the assignment screen 130 to the management terminal apparatus 102, thereby causing the display device of the management terminal apparatus 102 to display the assignment screen 130.

This causes the assignment screen 130 as illustrated in Fig. 6 to be displayed on the display device of the management terminal apparatus 102.

After S123, the assignment screen display process (S120) is finished.

The description will be continued from S130 by returning to Fig. 12.

In S130, the network management apparatus 200 extracts an assignment range.

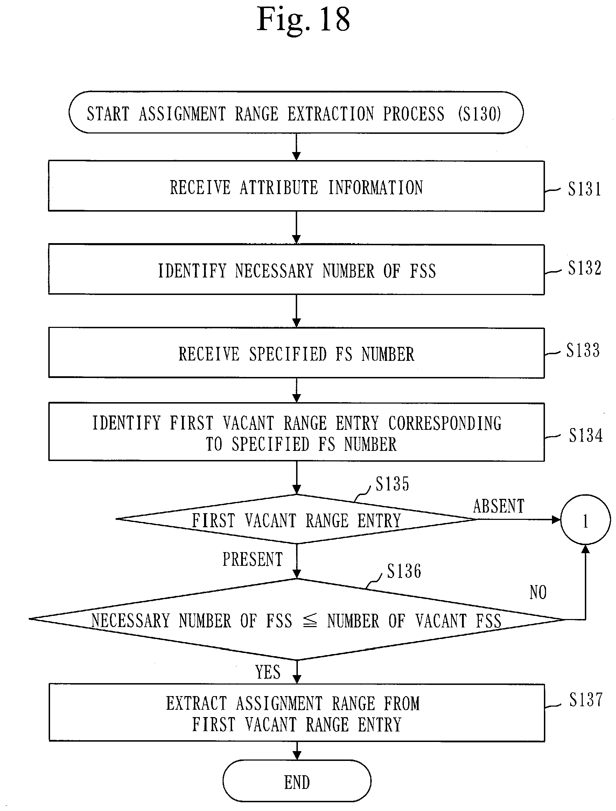

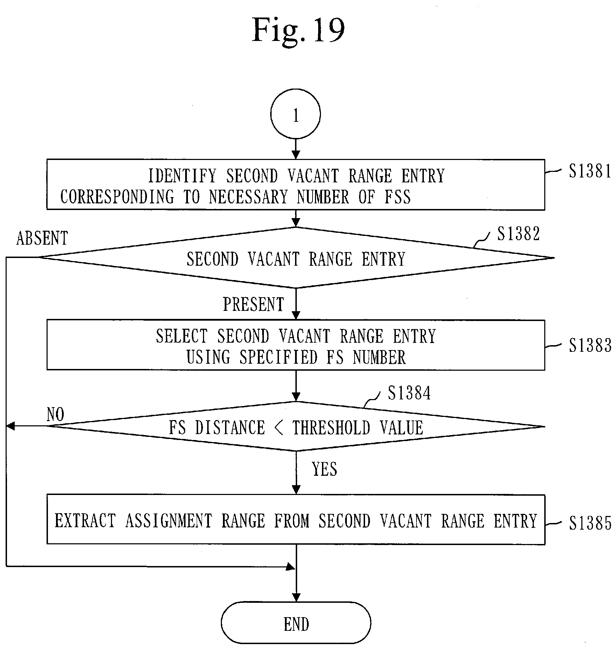

An assignment range extraction process (S130) will be described, based on Fig. 18 and Fig. 19.

S131 is a slot number reception process.

In S131, the attribute information reception unit 215 receives attribute information input to the assignment screen 130.

In S132, the attribute information reception unit 215 identifies the necessary number of the FSs using the slot number management file 294.

The necessary number of the FSs is the number of the slots corresponding to the modulation method included in the attribute information and the bandwidth included in the attribute information, among the numbers of the slots included in the slot number management file 294.

It is assumed that a QPSK as the modulation method and 100 Gbps as the bandwidth have been input on the assignment screen 130 in Fig. 7. In this case, the necessary number of the FSs that is identified by using the slot number management file 294 in Fig. 11 is 3.

When the necessary number of the FSs is identified, the assignment screen display unit 214 displays the necessary number of the FSs in the fourth text box 134 of the assignment screen 130.

S133 is a specified slot reception process.

In S133, the attribute information reception unit 215 receives a specified FS number specified by using the usage status table 139 of the assignment screen 130.

On the assignment screen 130 in Fig. 7, the row with the FS number of 11 is the specified slot row. Accordingly, the specified FS number is 11.

S134 to S137 constitute the assignment range extraction process.

In S134, the assignment range extraction unit 223 identifies a first vacant range entry, based on the specified FS number.

The first vacant range entry is an entry corresponding to the vacant range including the specified FS number among entries included in the vacant range file 293.

When the specified FS number is 11 in the vacant range file 293 in Fig. 10, the first vacant range entry is the entry of No. 2.

In S135, the assignment range extraction unit 223 determines whether there is an entry corresponding to the first vacant range entry.

If there is the entry corresponding to the first vacant range entry, the procedure proceeds to S136.

If there is no entry corresponding to the first vacant range entry, the procedure proceeds to S1381.

In S136, the assignment range extraction unit 223 obtains the number of the FSs included in the first vacant range entry as the number of vacant FSs.

Then, the assignment range extraction unit 223 compares the necessary number of the FSs with the number of the vacant FSs.

If the necessary number of the FSs is equal to or less than the number of the vacant FSs, the procedure proceeds to S137.

If the necessary number of the FSs is less than the number of the vacant FSs, the procedure proceeds to S1381.

If the first vacant range entry is the entry of No. 2 in the vacant range file 293 in Fig. 10, the number of the vacant FSs is 3.

If the necessary number of the FSs is 3, the necessary number of the FSs is equal to or less than the number of the vacant FSs. Thus, the procedure proceeds to S137.

In S137, the assignment range extraction unit 223 extracts the assignment range from the first vacant range entry.

Herein, the specified FS number is written as X, and the necessary number of the FSs is written as Y. Further, the maximum FS number of the first vacant range entry is written as Max.

If Max ≧ (X + Y - 1), a slot range from the frequency slot with the FS number of X to the frequency slot with the FS number of (X + Y - 1) is extracted as the assignment range.

If Max < (X + Y - 1), a slot range from the frequency slot with the FS number of (Max - Y + 1) to the frequency slot with the FS number of Max is extracted as the assignment range.

If the first vacant range entry is the entry of No. 2 in the vacant range file 293 in Fig. 10, the maximum FS number is 11.

If the specified FS number is 11 and the necessary number of the FSs is 3, the assignment range is a slot range from the frequency slot with the FS number of 9 to the frequency slot with the FS number of 11.

After S137, the assignment range extraction process (S130) is finished.

S1381 to S1385 constitute the assignment range extraction process.

In S1381, the assignment range extraction unit 223 identifies a second vacant range entry, based on the necessary number of the FSs.

The second vacant range entry is an entry corresponding to a vacant range including the number of the frequency slots that is equal to or more than the necessary number of the FSs, among the entries included in the vacant range file 293.

If the necessary number of the FSs is 3 in the vacant range file 293 in Fig. 10, the second vacant range entry is the entry of No. 2.

In S1382, the assignment range extraction unit 223 determines whether there is an entry corresponding to the second vacant range entry.

If there is the entry corresponding to the second vacant range entry, the procedure proceeds to S1383.

If there is no entry corresponding to the second vacant range entry, the assignment range is not extracted, and the assignment range extraction process (S130) is finished.

In S1383, if there is a plurality of the second vacant range entries, the assignment range extraction unit 223 selects one of the second vacant range entries, using the specified FS number.

The second vacant range entry to be selected is an entry having a smallest FS distance among the plurality of the second vacant range entries. The FS distance corresponds to the number of the frequency slots from the specified slot to the vacant range.

Herein, the specified FS number is written as X, the maximum FS number is written as Max, and the minimum FS number is written as Min. The FS distance is a smaller one of |X - Max||X - min|. |n| indicates the absolute value of n.

In S1384, the assignment range extraction unit 223 compares the FS distance of the selected second vacant range entry with a distance threshold value.

If the FS distance is less than the distance threshold value, the procedure proceeds to S1385.

If the FS distance is larger than the distance threshold value, the assignment range is not extracted. The assignment range extraction process (S130) is finished.

In S1385, the assignment range extraction unit 223 extracts the assignment range from the selected second vacant range entry.

Herein, the specified FS number is written as X, and the necessary number of the FSs is written as Y. Further, the maximum FS number is written as Max, and the minimum FS number is written as Min, in the second vacant range entry.

If Min > X, a slot range from the frequency slot with the FS number of Min to the frequency slot with the FS number of (Min + Y - 1) is extracted as the assignment range.

If Min ≦ X, a slot range from the frequency slot with the FS number of (Max - Y + 1) to the frequency slot with the FS number of Max is extracted as the assignment range.

After S1385, the assignment range extraction process (S130) is finished.

The description will be continued from S140, by returning to Fig. 12.

In S140, the assignment range extraction unit 223 determines whether the assignment range is present.

If the assignment range is present, the procedure proceeds to S150.

If the assignment range is absent, the assignment screen display unit 214 displays, on the assignment screen 130, an error message indicating that the assignment range is absent, thereby prompting input of new attribute information or specification of a new specified slot. Then, the procedure returns to S130.

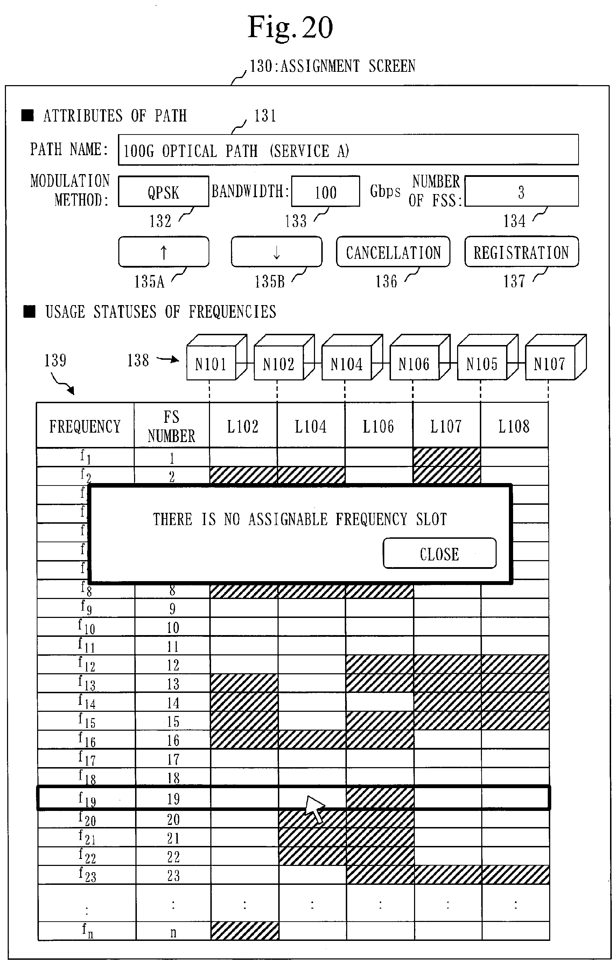

The frequency slot with the FS number of 19 was specified as the specified slot on the assignment screen 130 in Fig. 20.

However, a vacant range where the FS distance to the specified slot is less than the distance threshold value was absent.

Therefore, the error message indicating that the assignment range is absent is displayed on the assignment screen 130.

The description will be continued from S150, by returning to Fig. 12.

S150 is an assignment range display process.

In S150, the assignment range display unit 224 selects a plurality of the cells corresponding to the assignment range, using the usage status table 139 included in the assignment screen 130.

Then, the assignment range display unit 224 fills the selected plurality of the cells.

The frequency slot with the FS number of 11 was specified as the specified slot on the assignment screen 130 in Fig. 7.

A slot range from the frequency slot with the FS number of 9 to the frequency slot with the FS number of 11 was the vacant range. This vacant range includes the specified slot. Therefore, this vacant range was extracted as the assignment range.

Then, the cells corresponding to the assignment range were filled.

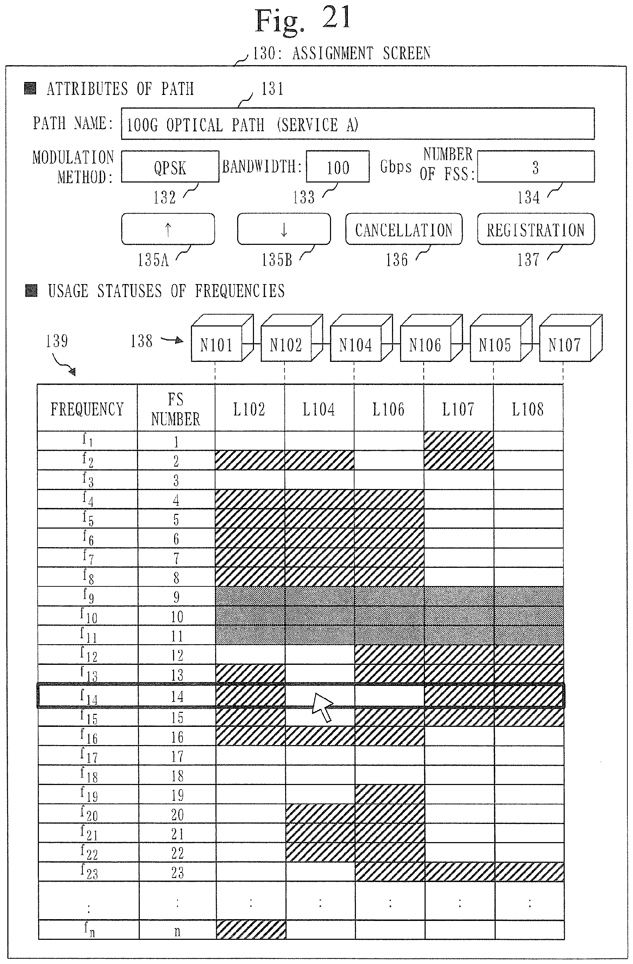

The frequency slot with the FS number of 14 was specified as the specified slot on the assignment screen 130 in Fig. 21.

Further, a slot range from the frequency slot with the FS number of 9 to the frequency slot with the FS number of 11 was the vacant range. The FS distance from this vacant range to the specified slot is less than the distance threshold value. Therefore, this vacant range was extracted as the assignment range.

Then, the cells corresponding to this assignment range were filled.

When the registration button 137 is depressed on the assignment screen 130, the procedure proceeds to S160.

S160 is a network control process.

The network control unit 230 updates the link management file 292 as follows.

The network control unit 230 selects, from the link management file 292, a link entry corresponding to each link name indicated in the usage status table 139.

Then, the network control unit 230 adds one or more of the FS numbers corresponding to the assignment range to one or more of the currently used FS numbers indicated by the selected link entry.

The network control unit 230 sets, in each of a plurality of the transmission apparatuses included in a specified transmission path, the attribute information of the transmission path and the assignment information of one or more of the frequency slots, as follows.

The network control unit 230 obtains, from the link management file 292, the apparatus names corresponding to the link name indicated in the usage status table 139.

Then, the network control unit 230 transmits to the transmission apparatuses identified by the obtained apparatus names the received attribute information and the assignment information indicating the extracted assignment range.

This sets the attribute information of the transmission path and the assignment information of the one or more of the frequency slots in each of the plurality of the transmission apparatuses included in the specified transmission path.

Then, communication is performed in the specified transmission path, using the one or more of the frequency slots that have been assigned.

After S160, the procedure of the network management method is finished.

### ***Description of Effects***

The network management apparatus 200 may assign, to the specified transmission path, the one or more of the frequency slots that are not in use. Therefore, it is not necessary for the manager 101 to determine the one or more of the frequency slots to be assigned to the transmission path. Accordingly, a working burden on the manager 101 is reduced.

The network management apparatus 200 may display the assignment screen 130 including the usage status table 139 in the form of the two-dimensional array. The manager 101 may visually recognize a vacant range of the frequency slots by referring to the assignment screen 130. This improves convenience.

### ***Other Configurations***

Any network system other than the optical network 110 may be used as a network system to be targeted .

The manager 101 may directly operate the network management apparatus 200 including an HMI instead of using the network management apparatus 200 through the management terminal apparatus 102.

The cells included in the usage status table 139 on the assignment screen 130 may indicate, by various display modes, a status where each frequency slot is not in use, a status where each frequency slot is in use, and a status where each frequency slot is assigned. A pattern, filling, a color, the thickness of a frame, and a character or a symbol to be written are each an example of the display mode of each cell.

### ***Description of Hardware Configuration***

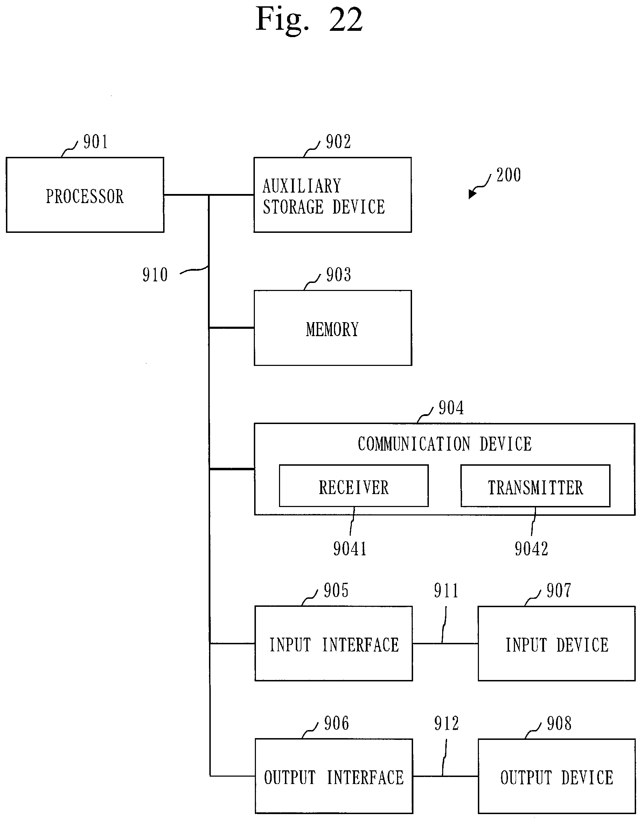

An example of a hardware configuration of the network management apparatus 200 will be described, based on Fig. 22.

The network management apparatus 200 is a computer including hardware such as a processor 901, an auxiliary storage device 902, a memory 903, a communication device 904, an input interface 905, and an output interface 906.

The processor 901 is connected to the other hardware via a signal line 910. The input interface 905 is connected to an input device 907 via a cable 911. The output interface 906 is connected to an output device 908 via a cable 912.

The processor 901 is an IC to perform processing and controls the other hardware. An example of the processor 901 is a CPU, a DSP, or a GPU. IC is an abbreviation for Integrated Circuit. CPU is an abbreviation for Central Processing Unit, DSP is an abbreviation for Digital Signal Processor, and GPU is an abbreviation for Graphics Processing Unit.

The auxiliary storage device 902 stores data. An example of the auxiliary storage device 902 is a ROM, a flash memory, or an HDD. ROM is an abbreviation for Read Only Memory, and HDD is an abbreviation for Hard Disk Drive.

The memory 903 stores data. An example of the memory 903 is a RAM. RAM is an abbreviation for Random Access Memory.

The communication device 904 includes a receiver 9041 to receive data and a transmitter 9042 to transmit data. An example of the communication device 904 is a communication chip or an NIC. NIC is an abbreviation for Network Interface Card.

The input interface 905 is a port to which the cable 911 is connected. An example of the port is a USB terminal. USB is abbreviation for Universal Serial Bus.

The output interface 906 is a port to which the cable 912 is connected. A USB terminal and an HDMI terminal are each an example of the port. HDMI (registered trade mark) is an abbreviation for High Definition Multimedia Interface.

The input device 907 receives data, an instruction, and a request. An example of the input device 907 is a mouse, a keyboard, or a touch panel.

The output device 908 outputs data, a result, and a response. An example of the output device 908 is a display or a printer. An example of the display is an LCD. LCD is an abbreviation for Liquid Crystal Display.

An OS is stored in the auxiliary storage device 902. OS is an abbreviation for Operating System.

Programs to implement functions of "units" such as the GUI control unit 210, the provisioning unit 220, and the network control unit 230 are stored in the auxiliary storage device 902. The programs to implement the functions of the "units" may be stored in a storage medium.

At least a part of the OS is loaded into the memory 903, and the processor 901 executes the program to implement a function of each "unit" while executing the OS. The program to implement the function of each "unit" is loaded into the memory 903, is read into the processor 901, and is executed by the processor 901.

The network management apparatus 200 may include a plurality of the processors 901, and the plurality of the processors 901 may cooperate to execute the programs to implement the functions of the "units".

Data, information, signal values, and variable values indicating results of processes by the "units" are stored in the memory 903, the auxiliary storage apparatus 902, a register in the processor 901, or a cache memory in the processor 901.

Each "unit" may be implemented as "circuitry".

Alternatively, the "unit" may be read as a "circuit", a "step", a" procedure", or a "process".

The "circuit" and the "circuitry" are each a concept including a processing circuit such as the processor 901 a logic IC, a GA, an ASIC, or an FPGA. GA is an abbreviation for Gate Array, ASIC is an abbreviation for Application Specific Integrated Circuit, and FPGA is an abbreviation for Field-Programmable Gate Array.

The embodiment is an exemplification of a preferred embodiment, and does not intend to limit the technical scope of the present invention. The embodiment may be partially carried out, or may be carried out by combination with a different embodiment.

The processing procedure described using the flowcharts and so on is an example of the processing procedure of each of the network management apparatus, the network management method, and the network management program.

### Reference Signs List

100: network management system, 101: manager, 102: management terminal apparatus, 103: network, 110: optical network, 120: routing screen, 121: first text box, 122: second text box, 123: third text box, 124: routing table, 125: cancellation button, 126: determination button, 127: network configuration diagram, 130: assignment screen, 131: first text box, 132: second text box, 133: third text box, 134: fourth text box, 135A: upper button, 135B: lower button, 136: cancellation button, 137: registration button, 138: routing diagram, 139: usage status table, 200: network management apparatus, 210: GUI control unit, 211: routing screen display unit, 212: routing information reception unit, 213: link information reception unit, 214: assignment screen display unit, 215: attribute information reception unit, 216: slot number reception unit, 217: specified slot reception unit, 220: provisioning unit, 221: usage status table generation unit, 222: vacancy management unit, 223: assignment range extraction unit, 224: assignment range display unit, 230: network control unit, 290: storage unit, 291: network management file, 292: link management file, 293: vacant range file, 294: slot number management file, 901: processor, 902: auxiliary storage device, 903: memory, 904: communication device, 9041: receiver, 9042: transmitter, 905: input interface, 906: output interface, 907: input device, 908: output device, 910: signal line, 911: cable, 912: cable

## Claims

1. A network management apparatus (200) for a network having links on which a set of contiguous frequency slots are used, the network management apparatus comprising:
a usage status table generation unit (221) adapted to generate a usage status table being a two-dimensional array having rows and column, and for each row an indication of a corresponding frequency slot and for each column an identifier of a corresponding link, the usage status table comprising a cell at the intersection of any row with any column, the corresponding cell comprising a status corresponding to a display mode;
an assignment screen display unit (214) adapted to cause a display device to display an assignment screen including the generated usage status table with each cell presenting its display mode; and
a slot number reception unit (216) adapted to receive slot number information to identify a number of the frequency slots;
the network management apparatus being
**characterized in that** the network management apparatus further comprises:
a specified slot reception unit (217) adapted to receive a specified slot identifier identifying a specified slot; and
an assignment range extraction unit
adapted to extract, as an assignment range, from the plurality of the frequency slots, a slot range constituted from successive frequency slots that are not used by any of the plurality of the links and constituted from the number of the frequency slots that is identified by the received slot number information, as an assignment range, under a condition that the assignment range includes the specified slot that is identified by the received specified slot identifier,
wherein the assignment range extraction unit is adapted, when the assignment range extraction unit cannot perform said extraction , to extract, as an assignment range not including the specified slot, from the plurality of the frequency slots, a slot range constituted from successive frequency slots that are not used by any of the plurality of the links and constituted from the number of the frequency slots that is identified by the received slot number information, under a condition that a number of the frequency slots from the specified slot to the slot range is smaller than a threshold value; and
**in that** the network management apparatus further comprises an assignment range display unit to set the display mode of one or more of the cells included in the usage status table and corresponding to the extracted assignment range to a display mode that indicates the assignment range.

2. The network management apparatus according to claim 1,
wherein the assignment range extraction unit is adapted to extract the assignment range using a vacant range file including vacant range information identifying a slot range constituted from successive frequency slots that are not used in any of the plurality of the links.

3. The network management apparatus according to claim 2,
wherein the assignment range extraction unit is adapted to select, from the vacant range file, vacant range information identifying a slot range including the frequency slot that is identified by the specified slot identifier and including a number of the frequency slots being equal to or more than the number of the frequency slots that is identified by the slot number information, and adapted to extract the assignment range from the slot range that is identified by the selected vacant range information.

4. The network management apparatus according to claim 2, comprising:
a vacancy management unit (222) adapted to generate the vacant range file, using the usage status table.

5. The network management apparatus according to claim 1,
wherein the assignment screen includes a user interface for specifying a modulation method and a user interface for specifying a bandwidth; and
wherein the slot number reception unit is adapted to receive, as the slot number information, the modulation method and the bandwidth specified on the assignment screen, and selects, from a slot number management file including a number of the slots associated with each modulation method and each bandwidth, the number of the slots associated with the modulation method and the bandwidth included in the slot number information, as the number that is identified by the slot number information.

6. A network management program for a network having links on which a set of contiguous frequency slots are used,
the network management program being adapted, when executed on a computer, to cause the computer to perform:
a usage status table generation process of generating a usage status table being a two-dimensional array having rows and column and for each row an indication of a corresponding frequency slot and for each column an identifier of a corresponding link, the usage table comprising a cell at the intersection of any row with any column, the corresponding cell comprising a status corresponding to a display mode;
an assignment screen display process of causing a display device to display an assignment screen including the generated usage status table with each cell presenting its display mode; and
a slot number reception process of receiving slot number information to identify a number of the frequency slots;
the network management program being further adapted, when executed on the computer, to cause the computer to further perform:
a specified slot reception process of receiving a specified slot identifier identifying a specified slot; and
an assignment range extraction process comprising extracting, as an assignment range, from the plurality of the frequency slots, a slot range constituted from successive frequency slots that are not used by any of the plurality of the links and constituted from the number of the frequency slots that is identified by the received slot number information, under a condition that the assignment range includes the specified slot that is identified by the received specified slot identifier,
and comprising extracting, when the assignment range extraction unit cannot perform said extraction , as an assignment range, from the plurality of the frequency slots, a slot range constituted from successive frequency slots that are not used by any of the plurality of the links and constituted from the number of the frequency slots that is identified by the received slot number information, as an assignment range not including the specified slot, under a condition that a number of the frequency slots from the specified slot to the slot range is smaller than a threshold value; and
in that the network management program is further adapted to cause the computer to further perform an assignment range display process of setting the display mode of one or more of the cells included in the usage status table and corresponding to the extracted assignment range to a display mode that indicates the assignment range.

## Patentansprüche

1. Netzwerkverwaltungsvorrichtung (200) für ein Netzwerk mit Verbindungen, auf welchen ein Satz von benachbarten Frequenzschlitzen verwendet wird,
wobei die Netzwerkverwaltungsvorrichtung umfasst:
eine Nutzungsstatustabellenerzeugungseinheit (221), die zum Erzeugen einer Nutzungsstatustabelle, die ein zweidimensionales Array mit Zeilen und Spalten ist, und für jede Zeile einer Angabe eines entsprechenden Frequenzschlitzes und für jede Spalte einer Kennung einer entsprechenden Verbindung ausgelegt ist, wobei die Nutzungsstatustabelle eine Zelle an der Überschneidung jeder Zeile mit jeder Spalte umfasst, wobei die entsprechende Zelle einen Status umfasst, der einem Anzeigemodus entspricht;
eine Zuordnungsbildschirmanzeigeeinheit (214), die so ausgelegt ist, dass sie eine Anzeigevorrichtung zum Anzeigen eines Zuordnungsbildschirms veranlasst, der die erzeugte Nutzungsstatustabelle umfasst, wobei jede Zelle ihren Anzeigemodus darstellt; und
eine Schlitzanzahlempfangseinheit (216), die so ausgelegt ist, dass sie Schlitzanzahlinformationen zum Identifizieren einer Anzahl der Frequenzschlitze empfängt;
wobei die Netzwerkverwaltungsvorrichtung **dadurch gekennzeichnet ist, dass** die Netzwerkverwaltungsvorrichtung ferner umfasst:
eine Einheit zum Empfang spezifizierter Schlitze (217), die so ausgelegt ist, dass sie eine Kennung eines spezifizierten Schlitzes empfängt, die einen spezifizierten Schlitz identifiziert; und
ein Zuordnungsbereichsextraktionseinheit, die so ausgelegt ist, dass sie als einen Zuordnungsbereich aus der Mehrzahl der Frequenzschlitze einen Schlitzbereich, der aus sukzessiven Frequenzschlitzen gebildet ist, die von keiner der Mehrzahl der Verbindungen verwendet werden und aus der Anzahl der Frequenzschlitze gebildet sind, die durch die empfangenen Schlitzanzahlinformationen identifiziert wird, unter einer Bedingung, dass der Zuordnungsbereich den spezifizierten Schlitz umfasst, der durch die empfangene Kennung des spezifizierten Schlitzes identifiziert wird, als einen Zuordnungsbereich extrahiert,
wobei die Zuordnungsbereichsextraktionseinheit so ausgelegt ist, dass sie, wenn die Zuordnungsbereichsextraktionseinheit die Extraktion nicht durchführen kann, als einen Zuordnungsbereich, der den spezifizierten Schlitz nicht umfasst, aus der Mehrzahl der Frequenzschlitze einen Schlitzbereich, der aus sukzessiven Frequenzschlitzen gebildet ist, die von keiner der Mehrzahl von Verbindungen verwendet werden und aus der Anzahl der Frequenzschlitze gebildet sind, die durch die empfangenen Schlitzanzahlinformationen identifiziert wird, unter einer Bedingung extrahiert, dass eine Anzahl der Frequenzschlitze vom spezifizierten Schlitz bis zum Schlitzbereich kleiner als ein Schwellenwert ist; und
dadurch, dass die Netzwerkverwaltungsvorrichtung ferner eine Zustandsbereichsanzeigeeinheit zum Setzen des Anzeigemodus einer oder mehrerer der Zellen, die in der Nutzungsstatustabelle enthalten sind und dem extrahierten Zuordnungsbereich entsprechen, auf einen Anzeigemodus umfasst, der den Zuordnungsbereich angibt.

2. Netzwerkverwaltungsvorrichtung nach Anspruch 1,
wobei die Zuordnungsbereichsextraktionseinheit so ausgelegt ist, dass sie den Zuordnungsbereich unter Verwendung einer Leerbereichsdatei mit Leerbereichsinformationen extrahiert, die einen Schlitzbereich identifizieren, der aus sukzessiven Frequenzschlitzen gebildet ist, die von keiner der Mehrzahl von Verbindungen verwendet werden.

3. Netzwerkverwaltungsvorrichtung nach Anspruch 2,
wobei die Zuordnungsbereichsextraktionseinheit so ausgelegt ist, dass sie aus der Leerbereichsdatei Leerbereichsinformationen auswählt, die einen Schlitzbereich identifizieren, der den Frequenzschlitz umfasst, der durch die Kennung des spezifizierten Schlitzes identifiziert wird, und eine Anzahl der Frequenzschlitze umfasst, die gleich wie oder größer als die Anzahl der Frequenzschlitze ist, die durch die Schlitzanzahlinformationen identifiziert wird, und so ausgelegt ist, dass sie den Zuordnungsbereich aus dem Schlitzbereich extrahiert, der durch die ausgewählten Leerbereichsinformationen identifiziert wird.

4. Netzwerkverwaltungsvorrichtung nach Anspruch 2, umfassend:
eine Leerstellenverwaltungseinheit (222), die zum Erzeugen der Leerbereichsdatei unter Verwendung der Nutzungsstatustabelle ausgelegt ist.

5. Netzwerkverwaltungsvorrichtung nach Anspruch 1,
wobei der Zuordnungsbildschirm eine Benutzeroberfläche zum Spezifizieren eines Modulationsverfahrens und eine Benutzeroberfläche zum Spezifizieren einer Bandbreite umfasst; und
wobei die Schlitzanzahlempfangseinheit so ausgelegt ist, dass sie das Modulationsverfahren und die Bandbreite, die auf dem Zuordnungsbildschirm spezifiziert werden, als die Schlitzanzahlinformationen empfängt und aus einer Schlitzanzahlverwaltungsdatei, die eine Anzahl der Schlitze umfasst, die mit jedem Modulationsverfahren und jeder Bandbreite assoziiert sind, die Anzahl der Schlitze, die mit dem Modulationsverfahren und der Bandbreite assoziiert sind, die in den Schlitzanzahlinformationen enthalten sind, als die Anzahl auswählt, die durch die Schlitzanzahlinformationen identifiziert wird.

6. Netzwerkverwaltungsprogramm für ein Netzwerk mit Verbindungen, auf welchen ein Satz von benachbarten Frequenzschlitzen verwendet wird,
wobei das Netzwerkverwaltungsprogramm so ausgelegt ist, dass es bei Ausführung auf einem Computer den Computer zum Durchführen von Folgendem veranlasst:
einen Nutzungsstatustabellenerzeugungsprozess zum Erzeugen einer Nutzungsstatustabelle, die ein zweidimensionales Array mit Zeilen und Spalten ist, und für jede Zeile einer Angabe eines entsprechenden Frequenzschlitzes und für jede Spalte einer Kennung einer entsprechenden Verbindung, wobei die Nutzungsstatustabelle eine Zelle an der Überschneidung jeder Zeile mit jeder Spalte umfasst, wobei die entsprechende Zelle einen Status umfasst, der einem Anzeigemodus entspricht;
einen Zuordnungsbildschirmanzeigeprozess zum Veranlassen, dass eine Anzeigevorrichtung eines Zuordnungsbildschirms anzeigt, der die erzeugte Nutzungsstatustabelle umfasst, wobei jede Zelle ihren Anzeigemodus darstellt; und
einen Schlitzanzahlempfangsprozess zum Empfangen von Schlitzanzahlinformationen zum Identifizieren einer Anzahl der Frequenzschlitze;
wobei das Netzwerkverwaltungsprogramm ferner so ausgelegt ist, dass es bei Ausführung auf dem Computer den Computer ferner zum Durchführen von Folgendem veranlasst:
einen Prozess zum Empfang spezifizierter Schlitze zum Empfangen einer Kennung eines spezifizierten Schlitzes, die einen spezifizierten Schlitz identifiziert; und
einen Zuordnungsbereichsextraktionsprozess,
umfassend ein Extrahieren als einen Zuordnungsbereich aus der Mehrzahl der Frequenzschlitze eines Schlitzbereichs, der aus sukzessiven Frequenzschlitzen gebildet ist, die von keiner der Mehrzahl von Verbindungen verwendet werden und aus der Anzahl der Frequenzschlitze gebildet sind, die durch die empfangenen Schlitzanzahlinformationen identifiziert wird, unter einer Bedingung, dass der Zuordnungsbereich den spezifizierten Schlitz umfasst, der durch die empfangene Kennung des spezifizierten Schlitzes identifiziert wird,
und umfassend ein Extrahieren, wenn die Zuordnungsbereichsextraktionseinheit die Extraktion nicht durchführen kann, als einen Zuordnungsbereich aus der Mehrzahl der Frequenzschlitze eines Schlitzbereichs, der aus sukzessiven Frequenzschlitzen gebildet ist, die von keiner der Mehrzahl von Verbindungen verwendet werden und aus der Anzahl von Frequenzschlitzen gebildet sind, die durch die empfangenen Schlitzanzahlinformationen identifiziert wird, unter einer Bedingung, dass eine Anzahl der Frequenzschlitze vom spezifizierten Schlitz bis zum Schlitzbereich kleiner als ein Schwellenwert ist, als einen Zuordnungsbereich, der den spezifizierten Schlitz nicht umfasst; und
dadurch, dass das Netzwerkverwaltungsprogramm ferner so ausgelegt ist, dass es den Computer ferner zum Durchführen eines Zuordnungsbereichsanzeigeprozesses zum Setzen des Anzeigemodus einer oder mehrerer der Zellen, die in der Nutzungsstatustabelle enthalten sind und dem extrahierten Zuordnungsbereich entsprechen, auf einen Anzeigemodus veranlasst, der den Zuordnungsbereich angibt.

## Revendications

1. Appareil de gestion de réseau (200) pour un réseau présentant des liaisons sur lesquelles un ensemble d'intervalles de fréquence contigus est utilisé, l'appareil de gestion de réseau comprenant :
une unité de génération de table d'états d'utilisation (221) apte à générer une table d'états d'utilisation correspondant à un tableau bidimensionnel présentant des lignes et colonnes, et pour chaque ligne, une indication d'un intervalle de fréquence correspondant, et pour chaque colonne, un identificateur d'une liaison correspondante, la table d'états d'utilisation comprenant une cellule à l'intersection d'une quelconque ligne avec une quelconque colonne, la cellule correspondante comprenant un état correspondant à un mode d'affichage ;
une unité d'affichage d'écran d'affectation (214) apte à amener un dispositif d'affichage à afficher un écran d'affectation incluant la table d'états d'utilisation générée avec chaque cellule présentant son mode d'affichage ; et
une unité de réception de nombres d'intervalles (216) apte à recevoir des informations de nombre d'intervalles afin d'identifier un nombre des intervalles de fréquence ;
l'appareil de gestion de réseau étant **caractérisé en ce que** l'appareil de gestion de réseau comprend en outre :
une unité de réception d'intervalle spécifié (217) apte à recevoir un identificateur d'intervalle spécifié identifiant un intervalle spécifié ; et
une unité d'extraction de plage d'affectation apte à extraire, sous la forme d'une plage d'affectation, de la pluralité des intervalles de fréquence, une plage d'intervalles constituée d'intervalles de fréquence successifs qui ne sont utilisés par aucune de la pluralité des liaisons, et constituée du nombre des intervalles de fréquence qui est identifié par les informations de nombre d'intervalles reçues, en tant qu'une plage d'affectation, sous réserve que la plage d'affectation inclue l'intervalle spécifié qui est identifié par l'identificateur d'intervalle spécifié reçu ;
dans lequel l'unité d'extraction de plage d'affectation est apte, lorsque l'unité d'extraction de plage d'affectation n'est pas en mesure de mettre en œuvre ladite extraction, à extraire, en tant qu'une plage d'affectation n'incluant pas l'intervalle spécifié, de la pluralité des intervalles de fréquence, une plage d'intervalles constituée d'intervalles de fréquence successifs qui ne sont utilisés par aucune de la pluralité des liaisons, et constituée du nombre des intervalles de fréquence qui est identifié par les informations de nombre d'intervalles reçues, sous réserve qu'un nombre des intervalles de fréquence, de l'intervalle spécifié à la plage d'intervalles, soit inférieur à une valeur de seuil ; et
**en ce que** l'appareil de gestion de réseau comprend en outre une unité d'affichage de plage d'affectation destinée à définir le mode d'affichage d'une ou plusieurs des cellules incluses dans la table d'états d'utilisation, et correspondant à la plage d'affectation extraite, sur un mode d'affichage qui indique la plage d'affectation.

2. Appareil de gestion de réseau selon la revendication 1,
dans lequel l'unité d'extraction de plage d'affectation est apte à extraire la plage d'affectation en utilisant un fichier de plages vacantes incluant des informations de plages vacantes identifiant une plage d'intervalles constituée d'intervalles de fréquence successifs qui ne sont utilisés dans aucune de la pluralité des liaisons.

3. Appareil de gestion de réseau selon la revendication 2,
dans lequel l'unité d'extraction de plage d'affectation est apte à sélectionner, à partir du fichier de plages vacantes, des informations de plages vacantes identifiant une plage d'intervalles incluant l'intervalle de fréquence qui est identifié par l'identificateur d'intervalle spécifié, et incluant un nombre des intervalles de fréquence qui égal ou supérieur au nombre des intervalles de fréquence qui est identifié par les informations de nombre d'intervalles, et apte à extraire la plage d'affectation de la plage d'intervalles qui est identifiée par les informations de plages vacantes sélectionnées.

4. Appareil de gestion de réseau selon la revendication 2, comprenant :
une unité de gestion de vacance (222) apte à générer le fichier de plages vacantes, en faisant appel à la table d'états d'utilisation.

5. Appareil de gestion de réseau selon la revendication 1,
dans lequel l'écran d'affectation inclut une interface utilisateur destinée à spécifier un procédé de modulation, et une interface utilisateur destinée à spécifier une largeur de bande ; et
dans lequel l'unité de réception de nombres d'intervalles est apte à recevoir, en tant que les informations de nombre d'intervalles, le procédé de modulation et la largeur de bande spécifiés sur l'écran d'affectation, et elle sélectionne, à partir d'un fichier de gestion de nombres d'intervalles incluant un nombre des intervalles associés à chaque procédé de modulation et chaque largeur de bande, le nombre des intervalles associés au procédé de modulation et à la largeur de bande, inclus dans les informations de nombre d'intervalles, en tant que le nombre qui est identifié par les informations de nombre d'intervalles.

6. Programme de gestion de réseau pour un réseau présentant des liaisons sur lesquelles un ensemble d'intervalles de fréquence contigus est utilisé, le programme de gestion de réseau étant apte, lorsqu'il est exécuté sur un ordinateur, à amener l'ordinateur à mettre en œuvre :
un processus de génération de table d'états d'utilisation consistant à générer une table d'états d'utilisation correspondant à un tableau bidimensionnel présentant des lignes et colonnes, et pour chaque ligne, une indication d'un intervalle de fréquence correspondant, et pour chaque colonne, un identificateur d'une liaison correspondante, la table d'états d'utilisation comprenant une cellule à l'intersection d'une quelconque ligne avec une quelconque colonne, la cellule correspondante comprenant un état correspondant à un mode d'affichage ;
un processus d'affichage d'écran d'affectation consistant à amener un dispositif d'affichage à afficher un écran d'affectation incluant la table d'états d'utilisation générée avec chaque cellule présentant son mode d'affichage ; et
un processus de réception de nombres d'intervalles consistant à recevoir des informations de nombre d'intervalles afin d'identifier un nombre des intervalles de fréquence ;
le programme de gestion de réseau étant en outre apte, lorsqu'il est exécuté sur l'ordinateur, à amener l'ordinateur à mettre en outre en oeuvre :
un processus de réception d'intervalle spécifié consistant à recevoir un identificateur d'intervalle spécifié identifiant un intervalle spécifié ; et
un processus d'extraction de plage d'affectation consistant à extraire, sous la forme d'une plage d'affectation, de la pluralité des intervalles de fréquence, une plage d'intervalles constituée d'intervalles de fréquence successifs qui ne sont utilisés par aucune de la pluralité des liaisons, et constituée du nombre des intervalles de fréquence qui est identifié par les informations de nombre d'intervalles reçues, sous réserve que la plage d'affectation inclue l'intervalle spécifié qui est identifié par l'identificateur d'intervalle spécifié reçu, et consistant à extraire, lorsque l'unité d'extraction de plage d'affectation n'est pas en mesure de mettre en œuvre ladite extraction, en tant qu'une plage d'affectation, de la pluralité des intervalles de fréquence, une plage d'intervalles constituée d'intervalles de fréquence successifs qui ne sont utilisés par aucune de la pluralité des liaisons, et constituée du nombre des intervalles de fréquence qui est identifié par les informations de nombre d'intervalles reçues, sous la forme d'une plage d'affectation n'incluant pas l'intervalle spécifié, sous réserve qu'un nombre des intervalles de fréquence, de l'intervalle spécifié à la plage d'intervalles, soit inférieur à une valeur de seuil ; et
**caractérisé en ce que** le programme de gestion de réseau est en outre apte à amener l'ordinateur à mettre en outre en œuvre un processus d'affichage de plage d'affectation consistant à définir le mode d'affichage d'une ou plusieurs des cellules incluses dans la table d'états d'utilisation, et correspondant à la plage d'affectation extraite, sur un mode d'affichage qui indique la plage d'affectation.
